# EUROPEAN PATENT SPECIFICATION

(11) **EP 3 323 598 B1**
(45) Date of publication and mention of the grant of the patent: **04.05.2022**
(21) Application number: 17202413.5
(22) Date of filing: 17.11.2017
(51) Int. Cl.: B29C 65/04, B29C 65/08, B29C 65/72

(54) **APPARATUS FOR WELDING PLASTIC PRODUCTS**
VORRICHTUNG ZUM VERSCHWEISSEN VON KUNSTSTOFFPRODUKTEN
APPAREIL POUR SOUDER DES PRODUITS EN MATIÈRE PLASTIQUE

(30) Priority: 17.11.2016 IT 201600116599
(43) Date of publication of application: 23.05.2018
(73) Proprietor: G.E.A.F. S.p.A., 43030 Calestano (PR) (IT)
(72) Inventor: FABIANO, Marco, 43030 Calestano (PR) (IT)
(74) Representative: Dallaglio, Fabrizio

(56) References cited:
- EP-A1- 2 724 840
- DE-C2- 3 744 831
- US-A- 3 146 141

## Description

The present invention relates to the field of welding apparatuses of plastic objects, and more precisely an object of the present invention is to provide independent units in a same machine or apparatus, with which to perform two different plastic welding technologies, i.e.:
- High-frequency welding
- Ultrasound welding

Normally, the process of both welding technologies involves high frequency electrical currents, in the order of 27-40 MegaHertz the first one, 20-70 KiloHertz the ultrasound one.

For example, the document US3146141A, describes an apparatus for welding plastic objects using a combination of high-frequency welding and ultrasound welding, but doesn't describe how to reduce the effect of interference from the high-frequency welding device on the ultrasonic welding device and vice versa.

The criticality of the coexistence of the two technologies results from the fact that the apparatus performs two welds in a sequence on the same subject, thus with molds close together and placed inside the same machine provided with external protection which act as shielding apparatus.

In this case, it is especially critical to make the magnetostrictive sensors, the linear potentiometer relating to the control of the sonotrode and the respective wiring immune from disturbance, both radiated and above all driven.During the high frequency step in the welding machine, the electric field strength exceeds 1000 Volts/meter and under these conditions, the geometry and position of every single component can be fatal, driven disturbance reaching outside the work area.

Due to specific measures and the implementation of the targeted shielding aid, the two technologies can be applied while protecting the delicate PLC control thereof from the risk of damage.

The protections preserve the process control from any disturbances in the reverse situation, i.e. during ultrasound welding.

These and other objects are achieved with the features of the invention described in the independent claim 1. The dependent claims describe preferred and/or particularly advantageous aspects of the invention.

Said objects and advantages are all achieved by the welding apparatus object of the present invention, which is characterized by the following claims.

### BRIEF DESCRIPTION OF THE FIGURES

This and other features will become more apparent from the following description of some of the configurations, illustrated purely by way of example in the accompanying drawings.
- Figure 1: shows a schematic diagram of the machine,
- Figure 2: the movable unit configured to perform the ultrasound welding,

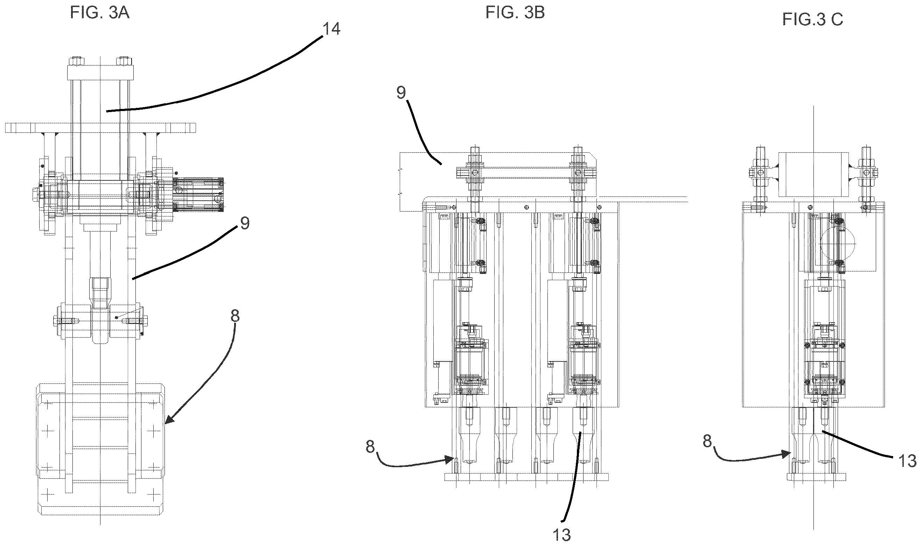

- Figures 3A, 3B, 3C: a detail of some views of the unit in figure 2,
- Figure 4: a sectional detail of the sonotrode unit with shielding elements.

### DESCRIPTION OF THE INVENTION

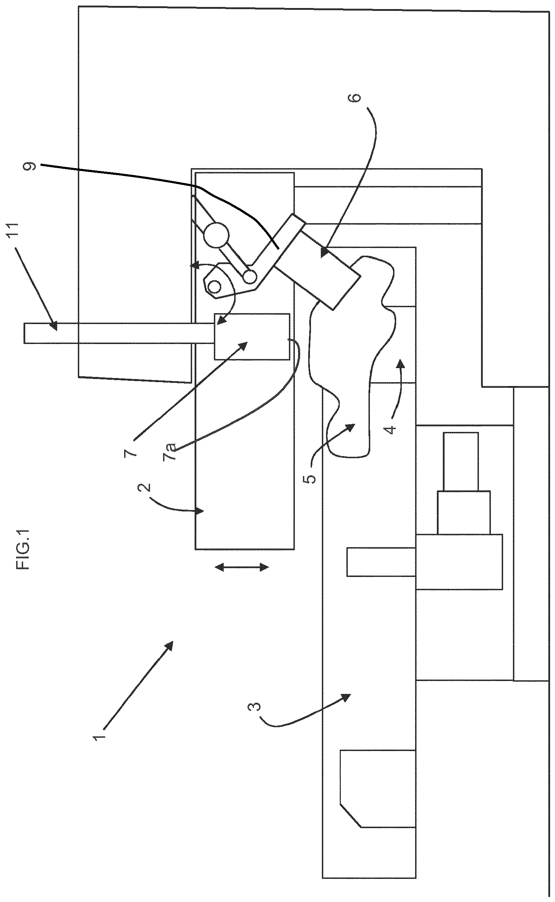

With particular reference to figure 1, reference numeral 1 indicates as a whole a machine or apparatus with which it is possible to perform the welding of plastic products 5. Machine 1 comprises at least:
two welding units, namely:
o A first welding unit 6, configured to generate ultrasound welds,
o A second welding unit 7, configured to generate high-frequency welds,
   - A lower structure 3, in the example consisting of a rotating carousel and configured to retain the pieces or products 5 to be welded on special templates 4.

Machine 1 is configured to run at least the two welds in sequence on the same product 5. As mentioned, the first welding unit 6 is configured to generate ultrasound type welds, while the second welding unit 7 is configured to generate high-frequency type welds.

According to one aspect of the invention, the apparatus further comprises an upper structure 2 configured to protect the surrounding environment from any emissions (such as ultrasound) during welding operations, creating a protective shield around the first and the second welding unit 6 and 7.

Preferably, said upper structure 2 is vertically movable, for example by the connection to motor means configured to at least approach it to the lower structure 3 during the welding operations.

The second welding unit 7 comprises a welding head 7a, which during the operating welding step must be placed in contact with product 5.

In a preferred embodiment, the second welding unit 7 further comprises a linear actuation means 11 which is configured to properly position the welding head 7a for the relative welding operation, in other words it places it against the underlying product 5 to be welded.

Said linear actuation means 11 therefore performs a preferably vertical translation between a rest position or distant from product 5 and an operating position in which the welding head 7a of the second welding unit 7 comes into contact with product 5.

When welding with the first welding unit 6, the second welding unit 7 is in the rest position.

As regards the first welding unit 6, it comprises at least one sonotrode 13 which in technical jargon identifies a component which transmits the vibration to product 5 to be assembled. Said sonotrode in turn comprises an end welding portion 12; in order to carry out the welding, the end welding portion 12 of sonotrode 13 is placed in contact with product 5.

It is observed that the first welding unit 6:
- comprises a body-rocker arm 9, configured to make said first welding unit 6 oscillate between two fixed positions, namely:
   o a first non-operating position of distancing from product 5 and from the second welding unit 7,
   o a second operating position of approach to product 5 and to carry out the welding.

According to an aspect of the invention, in order to carry out the welding, the first welding unit 6 provides for an approach to product 5 due to a non-linear movement imparted by the body-rocker arm 9; moreover, the end welding portions 12 of sonotrodes 13 must be placed in contact with product 5, therefore, there may be actuators configured to move sonotrodes 13 until the aforesaid contact is made.

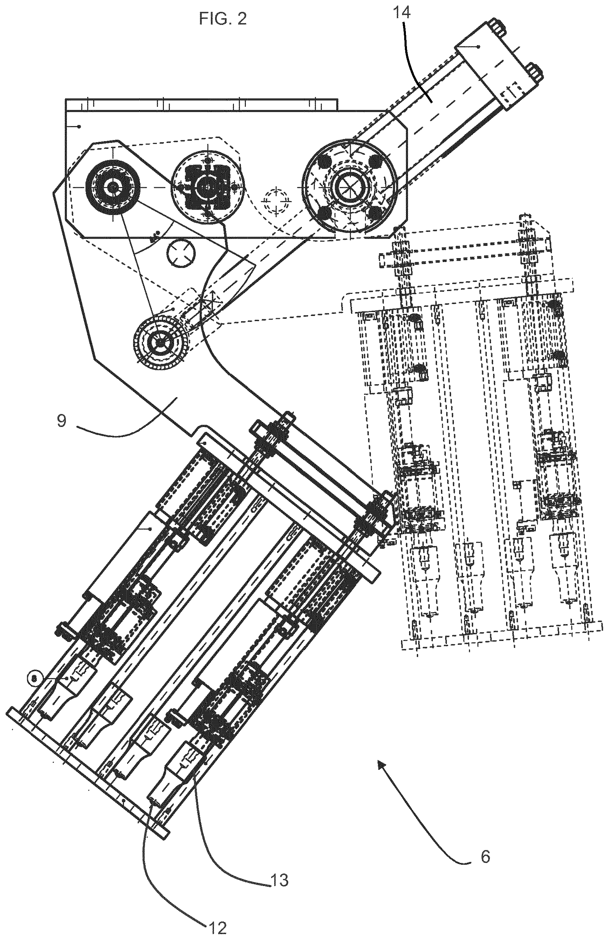

In the example shown in figure 2, the first welding unit 6 goes down and arranges itself inclined - preferably at 45° with respect to the support plane of products 5. Other angles may however be used as a function of the arrangement of the support matrix of the product to be welded.

The actuation of the body-rocker arm 9 can be carried out as in the example by an actuator means 14 of any type, for example a hydraulic cylinder.

In a preferred embodiment, when the first welding unit 6 is in a non-operating remote position, it is also brought to ground.

Moreover, machine 1 is configured to perform only in this condition the radiofrequency welding by means of the second welding unit 7.

With this solution, the electric field strength generated during the welding step of the second welding unit 7 does not cause damage or disturbance to the first welding unit 6, being brought to ground.

According to one aspect of the invention, in order to further protect in particular the at least one sonotrode 13, the first welding sealing unit 6 comprises shielding means or casing 8.

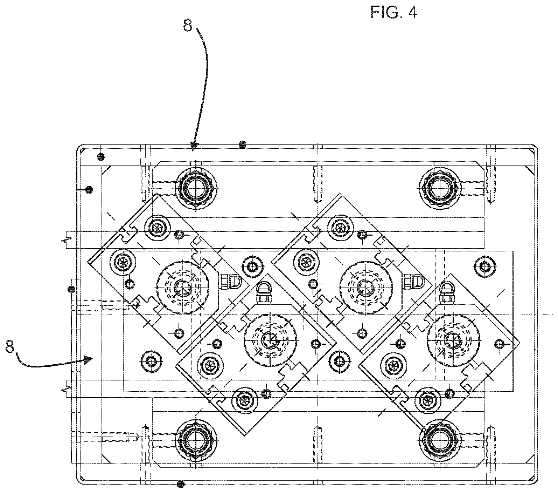

As shown in greater detail in figure 4, the aforesaid shielding casing 8 is preferably a hollow body which surrounds the associated sonotrode 13.

In fact, casing 8 extends over the whole portion of sonotrode 13 and has an opening adapted to let the end welding portion 12 of said sonotrode 13 protrude. Sheaths are also provided adapted to protect the cables reaching inside the machine.

## Claims

1. Apparatus (1) for welding plastic objects or products, of the type comprising
a. a first welding unit (6), configured to generate ultrasound welds,
b. a second welding unit (7), configured to generate high-frequency welds,
the apparatus **characterized in that** it comprises:
c. a lower structure (3) configured to retain the products (5) to be welded on suitable templates (4) and an upper structure (2) configured to define a protective shield during welding operations with the first welding unit (6) and with the second welding unit (7);
wherein the first welding unit (6) comprises a body-rocker arm (9), configured to make said first welding unit (6) oscillate between two fixed positions, namely:
i. a first non-operating remote position, moving away from the product (5) and from the second welding unit (7),
ii. a second operating approaching position, approaching the product (5) to carry out the welding,
the apparatus (1) being configured to carry out at least the two types of welds in sequence on the same product (5).

2. Apparatus (1) according to claim 1, wherein when the second welding unit (7) carries out the welding, the first welding unit (6) is in said first non-operating remote position away from the product (5) and is grounded on the structure of the apparatus.

3. Apparatus (1) according to claims 1 and 2, wherein the first welding unit (6) comprises at least one sonotrode (13) and a shielding casing (8) adapted to protect said at least one sonotrode (13).

4. Apparatus (1) according to claim 3, wherein the shielding casing (8) is preferably a hollow body surrounding the at least one sonotrode (13), said casing (8) having an opening adapted to allow the passage of an end welding portion (12) of said sonotrode (13).

5. Apparatus (1) according to one of the preceding claims, wherein the second welding unit (7) comprises a welding head (7a) and a linear actuation means (11) configured to position said welding head (7a) in contact with the product (5) when performing the welding.

6. Apparatus (1) according to claim 5, wherein the linear actuation means (11) is configured to translate said welding head (7a) in vertical direction between a rest position away from the product (5) and an operating position in contact with the product (5).

7. Apparatus (1) according to one of the preceding claims, wherein when the first welding unit (6) carries out the welding, the second welding unit (7) is in rest position away from the product (5).

8. Apparatus (1) according to claim 1, wherein the upper structure (2) is adapted to be moved vertically up to approach the lower structure (3).

9. Apparatus (1) according to one of the preceding claims, wherein said body-rocker arm (9) rotatably supported and is driven in rotation by means of an actuation means (14).

10. Apparatus (1) according to claim 9, wherein said actuation means (14) comprises a hydraulic cylinder.

## Patentansprüche

1. Vorrichtung (1) zum Verschweißen von Gegenständen oder Produkten aus Kunststoffmaterial, der Art umfassend
a. eine erste Schweißeinheit (6), konfiguriert zum Erzeugen von Ultraschallschweißungen,
b. eine zweite Schweißeinheit (7), konfiguriert zum Erzeugen von Hochfrequenzschweißungen,
wobei die Vorrichtung **dadurch gekennzeichnet ist, dass** sie umfasst:
c. eine untere Struktur (3), die derart konfiguriert ist, dass sie die zu schweißenden Produkte (5) auf geeigneten Formen (4) zusammenhält, und eine obere Struktur (2), die derart konfiguriert ist, dass sie während der Schweißvorgänge einen Schutzschirm mit der ersten Schweißeinheit (6) und mit der zweiten Schweißeinheit (7) definiert;
wobei die erste Schweißeinheit (6) einen Schwingarm (9) eines Körpers umfasst, der derart konfiguriert ist, dass er bewirkt, dass die erste Schweißeinheit (6) zwischen zwei festen Positionen oszilliert, nämlich:
i. eine erste entfernte nicht wirksame Position, die von dem Produkt (5) und von der zweiten Schweißeinheit (7) wegbewegbar ist,
ii. eine zweite wirksame Annäherungsposition, die sich dem Produkt (3) zum Durchführen des Schweißens nähert,
wobei die Vorrichtung (1) derart konfiguriert ist, um zumindest die zwei Arten des Schweißens nacheinander an demselben Produkt (5) auszuführen.

2. Vorrichtung (1) nach Anspruch 1, bei der, wenn die zweite Schweißeinheit (7) das Schweißen ausführt, sich die erste Schweißeinheit (6) in der ersten nicht wirksamen Position entfernt von dem Produkt (5) befindet und auf der Struktur der Vorrichtung geerdet ist.

3. Vorrichtung (1) nach Anspruch 1 und 2, bei der die erste Schweißeinheit (6) mindestens eine Sonotrode (13) und ein zum Schutz mindestens einer Sonotrode (13) ausgebildetes Abschirmgehäuse (8) umfasst.

4. Vorrichtung (1) nach Anspruch 3, bei der das Abschirmgehäuse (8) vorzugsweise ein Hohlkörper ist, der mindestens eine Sonotrode (13) umgibt, wobei das Gehäuse (8) eine Öffnung aufweist, die zum Durchführen einer Endschweißung (12) der Sonotrode (13) geeignet ist.

5. Vorrichtung (1) nach einem der vorangehenden Ansprüche, bei der die zweite Schweißeinheit (7) einen Schweißkopf (7a) und ein Linearantriebsmittel (11) umfasst, das konfiguriert ist, um den Schweißkopf (7a) in Kontakt mit dem Produkt (5) während des Schweißvorgangs zu positionieren.

6. Vorrichtung (1) nach Anspruch 5, bei der das Linearantriebsmittel (11) konfiguriert ist, um den Schweißkopf (7a) in der vertikalen Richtung zwischen einer Ruheposition entfernt von dem Produkt (5) und einer wirksamen Position in Kontakt mit dem Produkt (5) zu übertragen.

7. Vorrichtung (1) nach einem der vorhergehenden Ansprüche, bei der, wenn die erste Schweißeinheit (6) das Schweißen durchführt, sich die zweite Schweißeinheit (7) in einer von dem Produkt (5) entfernten Ruheposition befindet.

8. Vorrichtung (1) nach Anspruch 1, bei der die obere Struktur (2) angepasst ist, um vertikal bewegt zu werden, bis sie sich der unteren Struktur (3) nähert.

9. Vorrichtung (1) nach einem der vorhergehenden Ansprüche, bei der der Schwingarm (9) des Körpers drehbar gelagert ist und mittels einer Betätigungseinrichtung (14) gedreht wird.

10. Vorrichtung (1) nach Anspruch 9, bei der die Antriebseinrichtung (14) einen Hydraulikzylinder umfasst.

## Revendications

1. Dispositif (1) de soudage d'objets ou de produits en matière plastique, du type comportant
a. Une première unité de soudage (6), configurée pour générer des soudures par ultrasons,
b. Une deuxième unité de soudage (7), configurée pour générer des soudures à haute fréquence,
le dispositif étant **caractérisé en ce qu'**il comprend:
c. Une structure inférieure (3) configurée pour maintenir les produits (5) à souder sur des formes appropriées (4), et une structure supérieure (2) configurée pour définir un écran de protection lors des opérations de soudage avec la première unité de soudage (6) et avec la deuxième unité de soudage (7);
dans lequel la première unité de soudage (6) comprend un bras oscillant (9) d'un corps, configuré pour faire osciller ladite première unité de soudage (6) entre deux positions fixes, à savoir:
i. Une première position non opérative à distance, mobile à distance du produit (5) et de la deuxième unité de soudage (7),
ii. Une deuxième position d'approche opérationnelle, qui approche le produit (5) pour effectuer le soudage,
le dispositif (1) étant configuré pour effectuer au moins les deux types de soudage en séquence sur un même produit (5) .

2. Dispositif (1) selon la revendication 1, dans lequel lorsque la deuxième unité de soudage (7) effectue le soudage, la première unité de soudage (6) est dans ladite première position de non fonctionnement éloignée du produit (5) et est mise à la terre sur la structure du dispositif.

3. Dispositif (1) selon les revendications 1 et 2, dans lequel la première unité de soudage (6) comprend au moins une sonotrode (13) et un boîtier de blindage (8) adapté pour protéger au moins une sonotrode (13).

4. Dispositif (1) selon la revendication 3, dans lequel le boîtier de blindage (8) est de préférence un corps creux qui entoure au moins une sonotrode (13), dans lequel le boîtier (8) présente une ouverture apte à permettre le passage d'une extrémité de soudage (12) de la sonotrode (13).

5. Dispositif (1) selon l'une des revendications précédentes, dans lequel la deuxième unité de soudage (7) comprend une tête de soudage (7a) et un moyen d'entraînement linéaire (11) configuré pour positionner la tête de soudage (7a) en contact avec le produit (5) pendant le processus de soudage.

6. Dispositif (1) selon la revendication 5, dans lequel le moyen d'entraînement linéaire (11) est configuré pour transférer la tête de soudage (7a) dans le sens vertical entre une position de repos éloignée du produit (5) et une position de travail en contact avec le produit (5).

7. Dispositif (1) selon l'une des revendications précédentes, dans lequel lorsque la première unité de soudage (6) effectue le soudage, la deuxième unité de soudage (7) est dans une position de repos éloignée du produit (5).

8. Dispositif (1) selon la revendication 1, dans lequel la structure supérieure (2) est adaptée pour être déplacée verticalement jusqu'à ce qu'elle se rapproche de la structure inférieure (3).

9. Dispositif (1) selon l'une des revendications précédentes, dans lequel ledit bras oscillant (9) du corps est supporté avec possibilité de rotation et est entraîné en rotation par un moyen d'actionnement (14).

10. Dispositif (1) selon la revendication 9, dans lequel les moyens d'entraînement (14) comprennent un vérin hydraulique.
